# EUROPÄISCHE PATENTSCHRIFT

(11) **EP 0 775 603 B1**
(45) Veröffentlichungstag und Bekanntmachung des Hinweises auf die Patenterteilung: **10.01.2001**
(21) Anmeldenummer: 96118593.1
(22) Anmeldetag: 20.11.1996
(51) Int. Cl.: B60G 21/055, B60G 7/00, F16C 11/06, F16C 7/00

(54) **Verbindung eines Stabilisators mit der Radaufhängung eines Kraftfahrzeuges**
Connection of a stabiliser with the wheel suspension of a motor vehicle
Connexion d'un stabilisateur avec la suspension de roue d'un véhicule automobile

(30) Priorität: 23.11.1995 DE 19543690
(43) Veröffentlichungstag der Anmeldung: 28.05.1997
(73) Patentinhaber: TRW Fahrwerksysteme GmbH & Co. KG, 40547 Düsseldorf (DE)
(72) Erfinder: Kraps, Jakob, 41542 Dormagen (DE)
(74) Vertreter: Stenger, Watzke & Ring Patentanwälte

(56) Entgegenhaltungen:
- DE-A- 4 331 976
- FR-A- 1 105 525
- FR-A- 1 373 934
- GB-A- 2 006 319
- GB-A- 2 220 625
- US-A- 2 254 325
- US-A- 2 300 237
- US-A- 3 740 986
- US-A- 5 062 656
- PATENT ABSTRACTS OF JAPAN vol. 013, no. 465 (M-882), 20.Oktober 1989 & JP 01 182109 A (NHK SPRING CO LTD), 20.Juli 1989,
- KUNSTSTOFFE, Bd. 82, Nr. 3, 1.März 1992, Seiten 217-222, XP000257527 SCHUETT H J ET AL: "SPRITZGEGOSSENES ANLENKGESTAENGE FUER EINEN PKW-STABILISATOR"
- PATENT ABSTRACTS OF JAPAN vol. 015, no. 272 (M-1134), 10.Juli 1991 & JP 03 092419 A (IWATAKI GIKEN KK), 17.April 1991,

## Beschreibung

Die Erfindung betrifft die Verbindung eines Endes eines Stabilisators mit einem Teil, vorzugsweise einem Querlenker einer Radaufhängung eines Kraftfahrzeuges mittels einer Koppel, die sowohl mit dem Stabilisator als auch mit der Radaufhängung über jeweils ein Gelenk verbunden ist.

Aus der JP-A-01 182 109 ist die Verbindung eines Endes eines Stabilisators mit einem Querlenker einer Radaufhängung eines Kraftfahrzeuges mittels einer Koppel bekannt, die geradlinig ausgebildet und an beiden Enden über je ein Gelenk verbunden ist. Diese bekannte Verbindung zwischen Stabilisator und einem Teil einer Radaufhängung eines Kraftfahrzeuges hat den Nachteil, daß nicht nur die Koppel und der Querlenker zur Aufnahme der Lagerschalen bzw. des Lagerzapfens aufwendig bearbeitet werden müssen, sondern daß auch eine durch spanende Bearbeitung aufwendige Vorbereitung des Stabilisators erforderlich ist.

Der Erfindung liegt deshalb die **Aufgabe** zugrunde, die mittels einer Koppel erfolgende Verbindung eines Stabilisators mit einem Teil der Radaufhängung mit dem Ziel der Reduzierung der Bearbeitungsvorgänge und damit der Kosten weiterzuentwickeln.

Die **Lösung** dieser Aufgabenstellung durch die Erfindung ist dadurch gekennzeichnet, daß die Koppel mit in axialer Richtung des Stabilisators verlaufenden Enden und einstückig angeformten Lagerzapfen versehen ist und daß einer dieser Lagerzapfen über die Lagerschalen im rohrförmigen Ende des Stabilisators und das andere Ende über die Lagerschale in einer Aufnahmeöffnung des Querlenkers gelagert ist.

Durch die erfindungsgemäße Weiterbildung der bekannten Verbindung entfällt die Notwendigkeit einer aufwendigen Bearbeitung des einen Lagerzapfen der Koppel aufnehmenden Endes des Stabilisators, weil die zu diesem Lagerzapfen gehörende Lagerschale wegen der Anordnung des Lagerzapfens in axialer Verlängerung des jeweiligen Koppelendes auf einfache Weise direkt in das Ende des rohrförmigen Stabilisators eingesetzt werden kann. Es ist lediglich erforderlich, den rohrförmigen Stabilisator exakt auf das erforderliche Endmaß abzulängen. Da der andere Lagerzapfen der Koppel mittels einer Lagerschale in einer Aufnahmeöffnung der Radaufhängung, insbesondere eines Querlenkers gelagert wird, der bereits wegen seiner Aufhängung mit mindestens einer weiteren Aufnahmeöffnung versehen sein muß, verringern und vereinfachen sich auch die Bearbeitungsvorgänge des Querlenkers bzw. des mit dem Stabilisator zu verbindenden Teils der Radaufhängung. Dieses Teil kann in einer Einspannung mit einer reduzierten Anzahl von Zerspanungsvorgängen bearbeitet werden, so daß sich auch insoweit eine Arbeits- und Kostenreduzierung ergibt. Weiterhin entfallen bei der erfindungsgemäßen Weiterbildung verschiedene Befestigungsteile, da die Lagerzapfen unmittelbar an der Koppel ausgebildet werden. Die gegenüber dem bekannten Stand der Technik günstigere Ausrichtung der Lagerzapfen zur Koppel und der Lagerschalen zum Stabilisator bzw. Querlenker erlaubt darüber hinaus eine Verringerung des Volumens der Einzelteile und ergibt somit eine Gewichtsersparnis. Schließlich ergibt sich durch die erfindungsgemäße Weiterbildung ein geringerer Montageaufwand, so daß insgesamt eine erhebliche Kosteneinsparung erzielt wird.

Gemäß einem weiteren Merkmal der Erfindung können die Lagerzapfen als Kugelzapfen ausgebildet werden.

Um die Anordnung eines Dichtungsbalges für das jeweilige Gelenk zu erleichtern, kann gemäß einem weiteren Merkmal der Erfindung im Übergangsbereich der Koppel zum Kugelzapfen eine Rille als Sitzfläche für die Randverstärkung eines Dichtungsbalges eingeformt und die Lagerschale mit einer Aufnahmenut für die andere Randverstärkung des Dichtungsbalges ausgebildet sein. Eine solche Ausführung ist an sich aus der US-A-3 740 986 bekannt.

Gemäß einem weiteren Merkmal der Erfindung können die Lagerzapfen als Kugelzapfen ausgebildet werden, die vorzugsweise einstückig an der Koppel angeformt sind.

Um die Anordnung eines Dichtungsbalges für das jeweilige Gelenk zu erleichtern, kann gemäß einem weiteren Merkmal der Erfindung im Übergangsbereich der Koppel zum Kugelzapfen eine Rille als Sitzfläche für die Randverstärkung eines Dichtungsbalges eingeformt sein. Weiterhin ist es möglich, die Lagerschale mit einer Aufnahmenut für die andere Randverstärkung des Dichtungsbalges auszubilden.

Auf der Zeichnung sind zwei Ausführungsbeispiele der erfindungsgemäßen Verbindung dargestellt, und zwar zeigt:
- Fig. 1: ein erstes Ausführungsbeispiel anhand einer Draufsicht auf eine Koppel, deren Enden mittels eines zylindrischen Lagerzapfens in einem Stabilisator bzw. einem Querlenker gelagert sind, und
- Fig. 2: eine der Fig. 1 entsprechende Darstellung eines zweiten Ausführungsbeispiels mit an den Enden der Koppel angeformten Kugelzapfen.

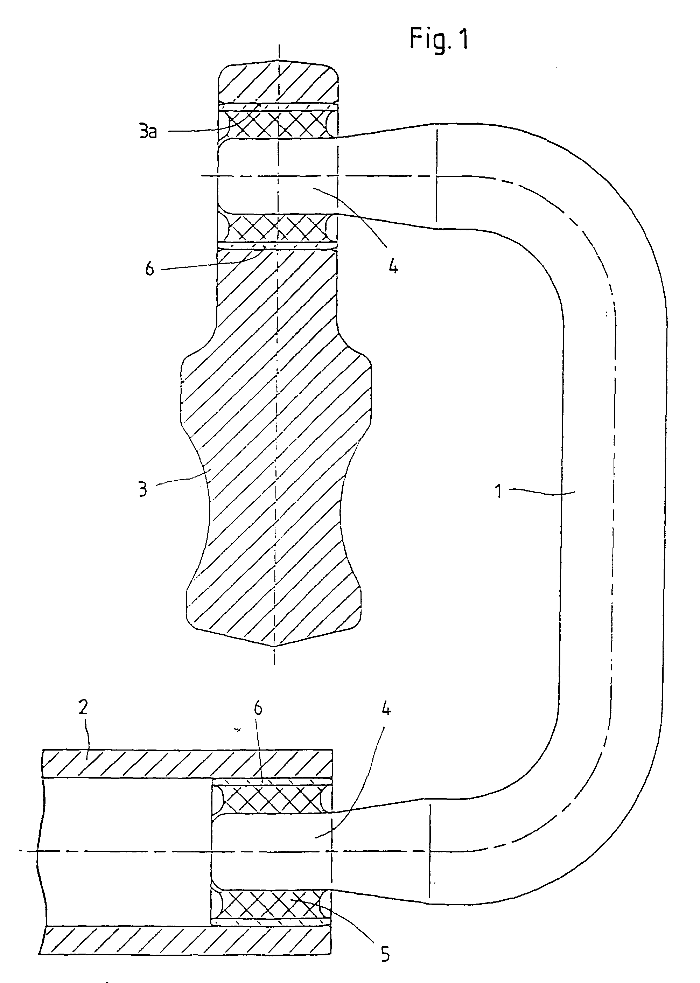

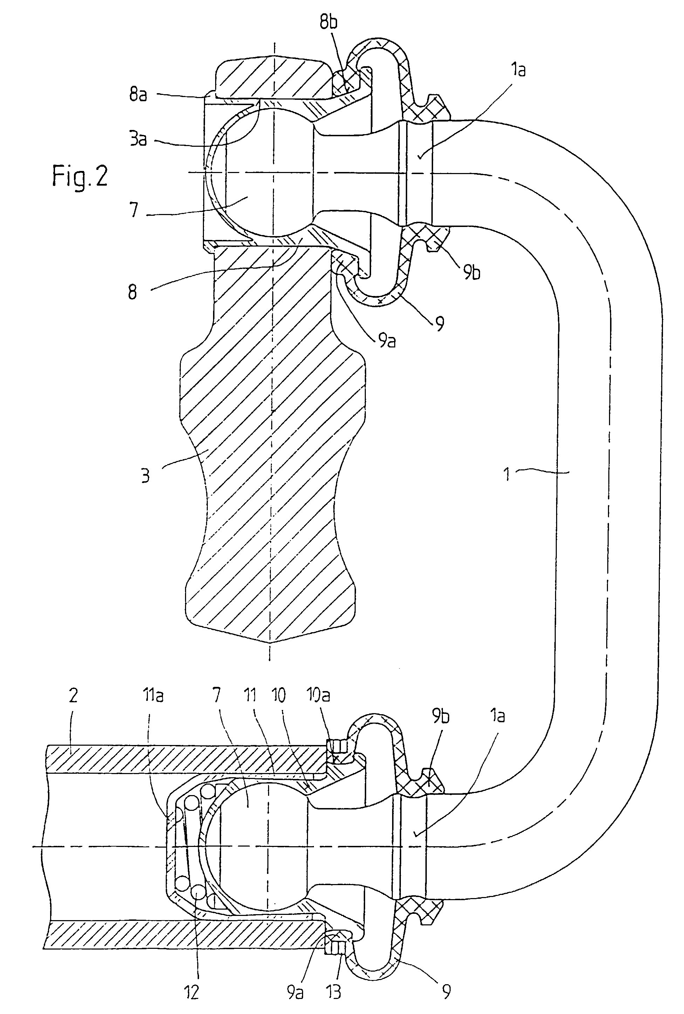

Bei beiden Ausführungsbeispielen dient eine Koppel 1 als Verbindung zwischen einem rohrförmigen Stabilisator 2 und einem Teil einer Radaufhängung eines Kraftfahrzeuges, das als Querlenker 3 dargestellt ist. Das auf der Zeichnung erkennbare Ende des Stabilisators 2 ist ebenso wie der Querlenker 3 in der Haupterstreckungsebene der Koppel 1 im Schnitt dargestellt. Der vorzugsweise geschmiedete Querlenker 3 ist mit mindestens einer Lageröffnung für seine Aufhängung und ggf. einer weiteren Lageröffnung für die Anbringung eines Stoßdämpfers versehen, die jedoch wegen des Schnittverlaufes auf der Zeichnung nicht zu erkennen sind. Der Stabilisator 2 ist zumindest an seinem Ende rohrförmig ausgebildet, wie sich aus den Fig. 1 und 2 ergibt.

Bei beiden Ausführungsbeispielen ist jedes Ende der Koppel 1 mit einem in axialer Richtung des jeweiligen Endes verlaufenden Lagerzapfen versehen. Während der eine Lagerzapfen im rohrförmigen Ende des Stabilisators 2 gelagert ist, erfolgt die Lagerung des anderen Lagerzapfens in einer Aufnahmeöffnung 3a des Querlenkers 3. Bezüglich der Ausbildung der Lagerzapfen und der zugehörigen Lagerschalen unterscheiden sich die beiden Ausführungsbeispiele.

Beim ersten Ausführungsbeispiel nach Fig. 1 ist die Koppel 1 mit zylindrischen Lagerzapfen 4 versehen, auf denen ein ringförmiges Lagerelement 5 aus dauerelastischem Material angeordnet ist. Mittels einer zylindrischen, als Lagerschale dienenden Buchse 6 ist das Lagerelement 5 entweder im rohrförmigen Ende des Stabilisators 2 oder in der Aufnahmeöffnung 3a des Querlenkers 3 gelagert. Aufgrund der Elastizität des Lagerelementes 5 sind begrenzte Relativbewegungen zwischen den jeweiligen Lagerzapfen 4 und dem Stabilisator 2 bzw. dem Querlenker 3 möglich.

Bei der zweiten Ausführungsform nach Fig. 2 sind an den Enden der Koppel 1 Kugelzapfen 7 angeformt, die jeweils mittels einer Lagerschale im rohrförmigen Ende des Stabilisators 2 bzw. in der Lageröffnung 3a des Querlenkers 3 gelagert sind. Die beiden in Fig. 2 gezeichneten Lagerschalen sind unterschiedlich ausgeführt.

Bei der den Kugelzapfen 7 im Querlenker 3 lagernden Ausführung handelt es sich um eine einteilige Lagerschale 8, die von der einen Seite her in die Aufnahmeöffnung 3a des Querlenkers 3 eingeführt wird und mit Hilfe elastisch verformbarer, an der anderen Seite des Querlenkers 3 anliegender Haken 8a in der Aufnahmeöffnung 3a fixiert wird. Hierbei bildet die Lagerschale 8 eine Aufnahmenut 8b für eine Randverstärkung 9a eines Dichtungsbalges 9, dessen andere Randverstärkung 9b an einer als Rille 1a ausgebildeten Sitzfläche festgelegt ist, die im Übergangsbereich zwischen der Koppel 1 und dem Kugelzapfen 7 ausgebildet ist. Der auf diese Weise zwischen Koppel 1 und Querlenker 3 angeordnete Dichtungsbalg 9 verhindert das Eintreten von Schmutz und Verunreinigungen in das vorzugsweise mit Fett gefüllte Gelenk.

Die den Kugelzapfen 7 im rohrförmigen Ende des Stabilisators 2 aufnehmende Lagerschale 10 ist mit einer konischen, sich in Richtung auf die Koppel 1 verjüngenden Mantelfläche ausgebildet, auf der ein mit einer entsprechend konischen Gegenfläche versehener Klemmring 11 angeordnet ist. Dieser Klemmring 11 stützt sich mit einer zylindrischen Mantelfläche im rohrförmigen Ende des Stabilisators 2 ab und ist mit einem Boden 11 a versehen. Zwischen diesem Boden 11 a und der Lagerschale 10 ist eine Kegelfeder 12 angeordnet. Diese Kegelfeder 12 ruft eine Kraft hervor, die über die Konusflächen eine Festlegung der Lagerschale 10 mit Hilfe des Klemmringes 11 im rohrförmigen Ende des Stabilisators 2 bewirkt.

Auch bei dieser Ausführungsform der Lagerschale 10 ist diese mit einer Aufnahmenut 10a für die Randverstärkung 9a des Dichtungsbalges 9 versehen. Die andere Randverstärkung 9b des Dichtungsbalges 9 wird wiederum in einer Rille 1a der Koppel 1 festgelegt. Beim Ausführungsbeispiel wird eine zusätzliche Sicherung des Dichtungsbalges 9 im Bereich seiner Randverstärkung 9a an der Lagerschale 10 durch einen Haltering 13 bewirkt.

Beide Ausführungsbeispiele lassen erkennen, daß keine Bearbeitung des rohrförmigen Endes des Stabilisators 2 erforderlich ist, um in diesem Ende den Lagerzapfen 4 mittels eines ringförmigen Lagerelements 5 und einer Büchse 6 oder den Kugelzapfen 7 mittels einer Lagerschale 10 zu lagern. Auch die Bearbeitung des Querlenkers 3 zur Lagerung des Lagerzapfens 4 bzw. Kugelzapfens 7 beschränkt sich auf die Ausbildung einer zylindrischen Aufnahmeöffnung 3a.

### Bezugszeichenliste:

- 1: Koppel
- 1a: Rille
- 2: Stabilisator
- 3: Querlenker
- 3a: Aufnahmeöffnung
- 4: zylindrischer Lagerzapfen
- 5: ringförmiges Lagerelement
- 6: Buchse
- 7: Kugelzapfen
- 8: Lagerschale
- 8a: Haken
- 8b: Aufnahmenut
- 9: Dichtungsbalg
- 9a: Randverstärkung
- 9b: Randverstärkung
- 10: Lagerschale
- 10a: Aufnahmenut
- 11: Klemmring
- 11a: Boden
- 12: Kegelfeder
- 13: Haltering

## Patentansprüche

1. Verbindung eines Endes eines Stabilisators (2) mit einem Teil, vorzugsweise einem Querlenker (3) einer Radaufhängung eines Kraftfahrzeuges mittels einer Koppel (1), die sowohl mit dem Stabilisator (2) als auch mit der Radaufhängung über jeweils ein Gelenk verbunden ist, wobei jedes Ende der Koppel (1) mit einem Lagerzapfen (4, 7) versehen ist, der mittels einer Lagerschale (6, 8, 10) in einer Aufnahmeöffnung (3a) der Radaufhängung bzw. im rohrförmigen Ende des Stabilisators (2) gelagert ist,
**dadurch gekennzeichnet,**
daß die Koppel (1) mit in axialer Richtung des Stabilisators (2) verlaufenden Enden und einstückig angeformten Lagerzapfen (4, 7) versehen ist und daß einer dieser Lagerzapfen (4, 7) über die Lagerschale (6, 10) im rohrförmigen Ende des Stabilisators (2) und das andere Ende über die Lagerschale (6, 8) in einer Aufnahmeöffnung (3a) des Querlenkers (3) gelagert ist.

2. Verbindung nach Anspruch 1, dadurch gekennzeichnet, daß die Lagerzapfen als Kugelzapfen (7) ausgebildet sind.

3. Verbindung nach Anspruch 2, dadurch gekennzeichnet, daß im Übergangsbereich der Koppel (1) zum Kugelzapfen (7) eine Rille (1a) als Sitzfläche für die Randverstärkung (9b) eines Dichtungsbalges (9) eingeformt ist und daß die Lagerschale (8, 10) mit einer Aufnahmenut (8b, 10a) für die andere Randverstärkung (9a) des Dichtungsbalges (9) ausgebildet ist.

## Claims

1. Connection of one end of a stabiliser (2) to a part, preferably a transverse link (3), of the wheel suspension of a motor vehicle by means of a coupler (1) which is connected both to the stabiliser (2) and also to the wheel suspension via a joint in each case, each end of the said coupler (1) being provided with a bearing pin (4, 7), which bearing pins are mounted, by means of bearing shells (6, 8, 10), in a receiving aperture (3a) on the wheel suspension and in the tubular end of the stabiliser (2), respectively,
**characterised in that**
the coupler (1) is provided with ends which extend in the axial direction of the stabiliser (2) and with bearing pins (4, 7) which are formed-on in one piece, and that one of the said bearing pins (4, 7) is mounted, via the bearing shell (6, 10), in the tubular end of the stabiliser (2) and the other end is mounted, via the bearing shell (6, 8), in a receiving aperture (3a) on the transverse link (3).

2. Connection according to claim 1, characterised in that the bearing pins are constructed as ball pins (7).

3. Connection according to claim 2, characterised in that a groove (la) is formed-in, as a seating face for the rim-reinforcement (9b) of a sealing bellows (9), in the transitional region between the link (1) and the ball pin (7), and that the bearing shell (8, 10) is constructed with a receiving channel (8b, 10a) for the other rim-reinforcement (9a) of the sealing bellows (9).

## Revendications

1. Assemblage d'une extrémité d'une barre anti-roulis (2) à une pièce, de préférence un bras oscillant transversal (3) d'une suspension de roue d'un véhicule automobile, au moyen d'une bielle (1) qui est assemblée aussi bien à la barre anti-roulis (2) qu'à la suspension de roue par l'intermédiaire d'une articulation à chaque fois, chaque extrémité de la bielle (1) étant munie d'un tourillon (4, 7) qui est logé au moyen d'une coquille de coussinet (6, 8, 10) dans une ouverture de logement (3a) de la suspension de roue ou dans l'extrémité tubulaire de la barre anti-roulis (2),
caractérisé en ce que la bielle (1) est munie d'extrémités s'étendant selon la direction axiale de la barre anti-roulis (2) et de tourillons (4, 7) formés dessus d'un seul tenant et en ce que l'un de ces tourillons (4, 7) est logé par l'intermédiaire de la coquille de coussinet (6, 10) dans l'extrémité tubulaire de la barre anti-roulis (2) et l'autre extrémité est logée par l'intermédiaire de la coquille de coussinet (6, 8) dans une ouverture de logement (3a) du bras oscillant transversal (3).

2. Assemblage selon la revendication 1, caractérisé en ce que les tourillons sont conçus comme des tourillons à boulet (7).

3. Assemblage selon la revendication 2, caractérisé en ce que, dans la zone de transition de la bielle (1) au tourillon à boulet (7), une rainure (la) est ménagée en creux comme surface d'appui pour le bord renforcé (9b) d'un soufflet d'étanchéité (9) et en ce que la coquille de coussinet (8, 10) est conçue avec une rainure de logement (8b, 10a) pour l'autre bord renforcé (9a) du soufflet d'étanchéité (9).
